# EUROPÄISCHE PATENTSCHRIFT

(11) **EP 1 287 737 B1**
(45) Veröffentlichungstag und Bekanntmachung des Hinweises auf die Patenterteilung: **02.07.2008**
(21) Anmeldenummer: 02019594.7
(22) Anmeldetag: 02.09.2002
(51) Int. Cl.: A01J 5/013

(54) **Melkverfahren und Melkvorrichtung mit qualitativer Charakterisierung von Milch**
Milking method and milking device with a qualitative characterisation of milk
Méthode et dispositif de traite avec une caractérisation qualitative du lait

(30) Priorität: 03.09.2001 DE 10143010
(43) Veröffentlichungstag der Anmeldung: 05.03.2003
(73) Patentinhaber: WestfaliaSurge GmbH, 59199 Bönen (DE)
(72) Erfinder: Kaever, Peter, 59302 Oelde (DE); Suhr, Olaf, 59302 Oelde (DE)
(74) Vertreter: Neumann, Ditmar

(56) Entgegenhaltungen:
- EP-A- 1 000 535
- DE-A- 19 921 777
- DE-C- 19 710 296
- DATABASE WPI Week 9322 Derwent Publications Ltd., London, GB; AN 1993-180989 XP002253143 & SU 1 741 055 A (SIBAAGROPRIBOR RES PRODN ASSOC), 15. Juni 1992 (1992-06-15)

## Beschreibung

Die Erfindung betrifft ein Verfahren sowie eine Vorrichtung zum Melken mit Qualitätsprüfung von Milch, wobei die Vorrichtung ein akustisches System zur Qualitätsprüfung von Milch aufweist.

Bei Melkvorrichtungen und -verfahren generell und insbesondere beim automatischen und automatisierten Melken mit halb- und auch vollautomatischen Melksystemen spielen erweiterte Funktionen eine zunehmend größere Rolle.

Ein Problem beim automatischen und auch halbautomatischen Melken ist die Prüfung der Qualität der Milch insbesondere auch auf sinnfällig veränderte Bestandteile. Sinnfällig veränderte Milch ist verunreinigte Milch, die sich in ihrer Erscheinung hinsichtlich Farbe, Geruch oder Konsistenz gegenüber verkehrsfähiger Milch unerwünscht auffällig unterscheidet. Sinnfällig veränderte Milch ist beispielsweise durch Stroh, Kot, Flocken, Blut oder Eiter verunreinigt. Flocken können bei einer Mastitiserkrankung des zu melkenden Tieres in der Milch enthalten sein; solche Milch muss abgesondert werden.

Deshalb wird beim manuellen Melken das Vorgemelk von dem Melker zunächst auf sinnfällig veränderte Bestandteile untersucht. Wenn das Vorgemelk der Untersuchung genügt, wird die dann weiterhin gemolkene Milch in den gemeinsamen Milchvorrat weitergeleitet, während sie sonst in einen separaten Behälter oder direkt abgeleitet wird.

Unterbleibt hingegen eine Untersuchung des Vorgemelks und wird die gemolkene Milch in einen Sammelbehälter für mehrere Tiere geleitet, kann es passieren, dass die gesamte gemolkene Milch nicht zur normalen Milchproduktion verwendet werden kann, wenn die Milch auch nur eines Tieres verunreinigt ist oder auch nur ein Tier an z.B. Mastitis erkrankt ist.

Deshalb ist eine automatisch erfolgende Untersuchung der Milch beim Melken ein Ziel bei automatischen und insbesondere auch bei robotergestützten Melksystemen.

Aus der DE 196 01 944 A1 ist eine Vorrichtung zur Messung von akustischen Größen in Fluiden bekannt. Derartige Vorrichtungen werden eingesetzt, um mittels akustischer Verfahren Informationen über akustische Eigenschaften eines Fluids bzw. darüber hinausgehend über die Beschaffenheit des Fluids als solches zu erhalten.

Aus der Offenlegungsschrift DE 1 498 622 ist ein Verfahren und eine Vorrichtung zur quantitativen Bestimmung des Gehalts von Milchfeststoffen eines Milchprodukts bekannt. Derartige Verfahren werden in Molkereien und dergleichen angewendet, um die Bestandteile der Milchprodukte zu bestimmen. Durch die Bestimmung von akustischen Eigenschaften werden der exakte Fettanteil und der Anteil von Proteinen in der Milch bestimmt. Solche Vorrichtungen und Verfahren sind apparativ aufwendig und teuer und benötigen viel Zeit bis das Ergebnis vorliegt.

Mit dem Artikel "Attenuation of ultrasound in milks and creams" von C.A. Miles in Ultrasonics 1990, Vol. 28, S. 394-400 ist weiterhin ein Verfahren zur Abschätzung der Konzentration an Fett und fettfreien Bestandteilen in Milch bekannt geworden.

Durch die DE-A1-199 21 777 ist ein Melkverfahren sowie eine Vorrichtung zur qualitativen Charakterisierung von Milch bekannt, wobei wenigstens zeitweise beim Melken wenigstens ein Teil der Milch untersucht wird, um die Qualität der Milch zu bestimmen. Die Bestimmung erfolgt derart, dass wenigstens ein Sendesignal ausgestrahlt und wenigstens ein Empfangssignal aufgenommen wird. Aus dem wenigstens einen Empfangssignal wird wenigstens ein Kennwert abgeleitet, welcher die Qualität der Milch charakterisiert.

EP 1 000 535 beschreibt ein Verfahren zur qualitativen Charakterisierung von Milch. Nach diesem Verfahren wird vorgeschlagen, dass die qualitative Charakterisierung der Milch in Abhängigkeit von der Färbung der Milch bestimmt wird. Hierzu sind entsprechende Sende- und Empfangseinrichtungen vorgesehen.

Ein erheblicher Nachteil bei den bekannten Milchuntersuchungsverfahren liegt darin, dass die verwendeten Analysegeräte voluminös und teuer sind, wobei die Durchführung der Untersuchungsverfahren zeitaufwendig ist. Für den Einsatz in Molkereien ist das kein wesentliches Problem, da ein zentrales Analysegerät oder einige wenige zentrale Analysegeräte ausreicht (bzw. ausreichen).

Um eine automatische Kontrolle der Milch beim Melken durchzuführen, ist es hingegen erforderlich, dass für jedes Tier oder sogar jede Zitze eines Tieres ein separates Analysegerät verwendet wird. Das führt bei bekannten Milchanalysegeräten zu Kosten, die eine wirtschaftliche Verwendung in automatischen Melksystemen nicht möglich macht.

Es ist Aufgabe der vorliegenden Erfindung, ein Verfahren zum Melken sowie eine Melkvorrichtung zur Verfügung zu stellen, mit denen während eines Melkenvorgangs eine Untersuchung der Milch erfolgen kann, um die Qualität der Milch zu beurteilen.

Diese Aufgabe wird erfindungsgemäß durch das Verfahren mit den Merkmalen des Anspruchs 1 und durch die erfindungsgemäße Vorrichtung mit den Merkmalen des Anspruchs 19 gelöst. Vorteilhafte Weiterbildungen und Ausgestaltungen der Erfindung sind Gegenstand der Unteransprüche.

Das erfindungsgemäße Verfahren dient zur qualitativer Charakterisierung von Milch während eines Melkvorgangs. Dazu wird wenigstens ein akustisches Sendesignal ausgestrahlt, das durch die Milch beeinflusst wird. Ein Empfangssignal wird aufgenommen. Aus dem aufgenommenen Empfangssignal wird wenigstens ein Kennwert bei wenigstens zwei Temperaturen abgeleitet, der geeignet ist, die Qualität der Milch zu charakterisieren.

Das erfindungsgemäße Verfahren und die erfindungsgemäße Vorrichtung haben viele Vorteile.

Durch den Einsatz des erfindungsgemäßen Verfahrens und/oder der erfindungsgemäßen Vorrichtung kann die Qualität der Milch schon beim Melken bestimmt werden. Dadurch wird erreicht, dass z.B. nur Milch in einen Sammelbehälter geleitet wird, die qualitativ zur Weiterverarbeitung geeignet ist. Das reduziert die Gefahr der Verunreinigung der Milch in dem Sammelbehälter durch Milch ungenügender Qualitätsstufe ganz erheblich.

Ein anderer Vorteil ist, dass unmittelbar beim Melken eines Tieres schon eine Aussage zur Qualität der Milch dieses Tieres getroffen werden kann. Das kann z.B. ausgenutzt werden, um bei ungenügender Qualität das entsprechende Tier einer eingehenderen visuellen oder auch tierärztlichen Untersuchung zuzuführen.

Ein weiterer Vorteil ist, dass es grundsätzlich ermöglicht wird, nach Abschluss des gesamten Melkvorgangs eine Qualitätsaussage zur ermolkenen Milch insgesamt zu treffen.

Bevorzugt wird die Qualität der Milch im Hinblick auf sinnfällig veränderte Bestandteile untersucht. Dazu wird ein Kennwert abgeleitet, der charakteristisch für wenigstens einen, die Milch sinnfällig verändernden, Bestandteil der Milch ist.

Bevorzugt ist dann, dass mit dem Verfahren Entscheidungskriterien über die Qualität, insbesondere die Sinnfälligkeit, abgeleitet werden können.

Es wird wenigstens zeitweise beim Melken ein Anteil der oder die gesamte Milch in die Messkammer eingeführt. Der akustische Sender gibt ein akustisches Signal aus, welches durch die in der Messkammer vorhandene Milch beeinflusst wird. Der Empfänger nimmt ein Empfangssignal auf und daraus wird wenigstens ein Kennwert abgeleitet, der die Qualität der Milch charakterisiert.

Es ist möglich, dass lediglich beim Anmelken ein Teil des Vorgemelkes oder aber im wesentlichen das ganze Vorgemelk untersucht wird. Es ist aber auch möglich, dass nur nach dem Anmelken untersucht wird oder sowohl als auch. Die Messungen können im wesentlichen über den gesamten Melkvorgang kontinuierlich, periodisch oder stichprobenartig durchgeführt werden.

Aus den so gewonnenen Größen wird wenigstens eine relevante charakteristische Größe der Milch abgeleitet. Zur Beurteilung der Qualität wird in einer Weiterbildung die charakteristische Größe mit einer Referenzgröße verglichen.

Der Vorteil von akustischen Methoden ist, dass sie im Gegensatz zu optischen Methoden weniger störanfällig sind, da der Reinigungsaufwand des akustischen Systems geringer ausfällt und die Wellenlängen des verwendeten Schalls typischerweise um ein vielfaches größer sind als typische Wellenlängen bei optischen Verfahren, die im Nanometerbereich liegen. Durch die erheblich größeren akustischen Wellenlängen bedingt, ist die Justage des akustischen Systems vergleichsweise einfach.

In einer bevorzugten Weiterbildung wird die Milch auf Flocken untersucht, wie sie z.B. bei einer Mastitiserkrankung auftreten können. Vorzugsweise wird ein Maß für einen Anteil bzw. ein Vorkommen von Partikeln oder Flocken in der Größe ab etwa 0,01 mm, vorzugsweise ab ca. 0,05 mm bis etwa 20 mm und besonders bevorzugt in dem Bereich zwischen etwa 0,1 mm und etwa 6 mm abgeleitet. Auch die Bestimmung im Partikelbereich 2 mm ist bevorzugt.

In einer weiteren bevorzugten Weiterbildung wird die Milch im Hinblick auf Kot und/oder Stroh und/oder Blut bzw. Eiter untersucht.

Typische Frequenzen des verwendeten Schalls liegen zwischen 10 Hz und etwa 500 MHz. Bevorzugt werden Frequenzen zwischen etwa 100 kHz und 200 MHz eingesetzt. Eine geeignete Frequenz ist beispielsweise 2 oder auch 3, 5, oder 10 MHz oder dergleichen. Es wird allerdings darauf hingewiesen, dass die Verwendung aller Schallfrequenzen möglich ist, bei denen Konzentrationsunterschiede einzelner Bestandteile und insbesondere auch sinnfällig veränderter Bestandteile in der Milch die akustischen Eigenschaften beeinflussen.

Vorzugsweise wird wenigstens eine Schallfrequenz verwendet, bei denen sinnfällig wahrnehmbare Bestandteile der Milch sich kontrastreich und besonders bevorzugt besonders kontrastreich von denen "normaler" Milch unterscheiden. Allerdings spielen bei der Auswahl der Frequenz oder Frequenzen auch noch andere Faktoren eine Rolle, wie z. B. der Preis, die Größe, die Haltbarkeit und die Wartungsfreiheit der Sendeeinrichtung, der Empfangseinrichtung und der Steuerungseinrichtung. Deshalb ist es auch möglich, eine Schallfrequenz zur Messung zu verwenden, bei der nur geringe Unterschiede in der Milch festgestellt werden können.

Mit Hilfe der Sendeeinrichtung wird Schall ausgesendet, der von dem Empfänger aufgenommen wird. Dazu ist wenigstens eine Empfangseinrichtung für akustische Signale empfindlich.

Es ist aber auch möglich, dass eine optische Empfangseinrichtung Verwendung findet. Eine optische Empfangseinrichtung kann beispielsweise unter Ausnutzung von akusto-optischen Effekten ein optisches Empfangssignal aufnehmen, das charakteristisch für wenigstens einen sinnfällig veränderten Bestandteil von Milch ist.

Dazu kann auch ein separates akusto-optisches Wandlermittel, wie z.B. eine oder mehrere Pockelszellen oder dergleichen, eingesetzt werden, um das akustische Sendesignal in ein optisches Empfangssignal umzuwandeln. Eine solche optische Empfangseinrichtung kann anstatt einer akustischen Empfangseinrichtung oder auch zusätzlich dazu Verwendung finden.

In einer bevorzugten Weiterbildung wird die erfindungsgemäße Vorrichtung kalibriert. Durch eine Kalibrierung des akustischen Systems bzw. der Sendeinrichtung(en) und der Empfangseinrichtung(en) kann z.B. die (akustische) Übertragungsfunktion des Systems erfasst werden, so dass ein Einfluss des Systems als solches auf die Messergebnisse herausgerechnet und damit vermieden werden kann.

In einer weiteren bevorzugten Weiterbildung wird die erfindungsgemäße Vorrichtung bei vorbestimmten oder auch wählbaren Gelegenheiten (re-)kalibriert. Beispielsweise ist es möglich die erfindungsgemäße Vorrichtung zum Melken bei jedem Wartungsvorgang oder auch einmal jährlich, monatlich, wöchentlich oder täglich oder dergleichen oder auch vor jedem oder jedem zweiten etc. Melkvorgang zu (re-)kalibrieren.

Eine regelmäßige Rekalibrierung der Melkvorrichtung bietet viele Vorteile. Eine sich ändernde akustische Übertragungsfunktion der Melkvorrichtung bzw. der Messkammer aufgrund von z.B. Alterungs- und Verschleißerscheinungen kann durch regelmäßige Rekalibrierung der Vorrichtung berücksichtigt werden, so dass Fehler bei den Messungen reduziert oder im wesentlichen vermieden werden können. Das trifft natürlich insbesondere auf eine Kalibrierung bei jedem Melkvorgang zu, wobei es für den erfindungsgemäßen Erfolg nicht erforderlich ist, bei jedem Melkvorgang zu rekalibrieren. Hier muss für jeden Anwendungsfall eine Abwägung von erforderlicher Auflösung oder auch Genauigkeit und nötigem Aufwand getroffen werden.

In einer bevorzugten Weiterbildung wird wenigstens ein akustischer Absorptionswert aufgenommen. Vorzugsweise wird dazu das Empfangssignal in bezug zu dem Sendesignal gesetzt. Dazu kann das Verhältnis der transmittierten Schallintensität zu eingestrahlter Schallintensität, d.h. das Verhältnis des vom Empfänger aufgenommen Schallsignals oder -spektrums zu dem vom Sender emittierten Schallsignal oder -spektrum, abgeleitet werden. Ein Absorptionswert kann die sogenannten absorptiven, d.h. die den Schall dämpfenden Aspekte wenigstens einer akustischen Eigenschaft des untersuchten Stoffes repräsentieren.

Vorzugsweise werden wenigstens zwei Absorptionswerte aufgenommen, wobei z.B. bei dem ersten eine erste Schallfrequenz und z.B. bei dem zweiten eine zweite Schallfrequenz verwendet wird. Es kann auch ein kontinuierliches oder quasikontinuierliches Absorptionsspektrum (oder auch mehrere Absorptionsspektren) abgeleitet werden. Möglich ist auch die Messung bei zwei, drei, vier, fünf oder einer Vielzahl diskreter Frequenzen oder Frequenzbereiche.

Mit Hilfe der akustischen Absorptionswerte bzw. auch -spektren lassen sich die absorptiven Bereiche in dem betrachteten Frequenzfenster des Schalls in der Milch erfassen. Oft reicht es aber auch aus, bei nur einer oder zwei einzelnen Frequenzen die Dämpfung des Schalls in dem untersuchten Stoff zu messen.

Ein Dispersionsspektrum stellt eine zur Schallgeschwindigkeit und zu dem Absorptionswert bzw. -spektrum ergänzende oder auch alternative Größe dar. Mit Dispersion bezeichnet man alle mit der Wellenbewegung einer laufenden (Schall-) Welle verbundenen Phänomene mit Geschwindigkeiten, die von ihrer (Schall-) Frequenz bzw. Wellenlänge abhängen.

Aus den akustischen Kennwerten (z.B. Schallgeschwindigkeit, Absorptionswert bzw. Absorptionsspektrum und dergleichen mehr) kann eine (oder mehrere) relevante charakteristische Größe von Milch abgeleitet werden. Dazu werden die in den gemessenen akustischen Werten enthaltenen Informationen mit den akustischen Eigenschaften von Milch mit bekannter Zusammensetzung in Beziehung gesetzt. Beispielsweise können je nach Absorptionsvermögen der Milch bei den jeweiligen Frequenzen bzw. Frequenzbereichen Rückschlüsse auf den Fettanteil in der Milch gezogen werden.

Da die akustischen Eigenschaften von Stoffen und somit auch die von Milch von der Temperatur abhängig sind, ist es zweckmäßig, bei Messung eines akustischen Kennwertes (Schallgeschwindigkeit, akustischer Absorptionswert etc.) die Temperatur der zu messenden Milch zu bestimmen.

Es ist auch möglich, die Temperatur der zu messenden Milch auf einen vorbestimmten oder wählbaren Wert einzustellen, bevor eine Bestimmung der akustischen Eigenschaften erfolgt. Vorteilhaft kann auch die Erwärmung und/oder Abkühlung der Milch bzw. Milchprobe vor oder auch bei der Messung sein. Eine gleichzeitige Erwärmung (Abkühlung) während der Messung ist auch möglich, da die benötigte Messzeit klein gegenüber der Zeit ist, in der eine relevante Temperaturänderung erfolgt.

In einer besonderen Ausgestaltung der Erfindung wird die Schallgeschwindigkeit und/oder wenigstens ein akustischer Absorptionswert von Milch gemessen, um die Qualität zu bestimmen.

In einer weiteren Ausgestaltung der Erfindung werden wenigstens zwei Spektren (bzw. Reihen spektraler Werte) gemessen, und es werden charakteristische Größen von Milch aus den beiden Absorptionsspektren und/oder den entsprechenden Schallgeschwindigkeiten ermittelt.

Erfindungsgemäß wird wenigstens eine Messung bei wenigstens einer zweiten Temperatur durchgeführt, wobei sich die zweite Temperatur von der ersten Temperatur unterscheidet. Vorzugsweise ist die zweite Temperatur größer als die erste, da es typischerweise einfacher ist zu heizen, als zu kühlen.

Insgesamt ist es bevorzugt, dass die Messtemperatur der Milch in dem Temperaturbereich liegt, indem Milch flüssig ist, also zwischen Gefrierpunkt und Siedepunkt. Für viele Anwendungsfälle (je nach geplanter Weiterverarbeitung der Milch) liegt ein günstiger Temperaturmessbereich zwischen etwa 5 °C und etwa 45 °C.

Besonders bevorzugt ist, dass wenigstens ein Temperaturwert in dem Bereich liegt, den die frisch gemolkene Milch naturgemäß hat, da dann für diesen Temperaturwert keine zusätzliche Aufheizung oder Abkühlung vorgenommen werden muss. Dieser Temperaturwert hängt von der zu melkenden Tierart (alle milchliefernden Tiere wie beispielsweise Kühe, Schafe, Ziegen, Kamele, Pferde, Esel, Lama, Dromedar, Büffel, Elche und sonstige Säugetiere) und den Umgebungsbedingungen (Temperatur, Schlauchlänge und -material etc.) ab.

Insbesondere bei der Ermittlung von mehreren Bestandteilen in Milch wird erfindungsgemäß wenigstens ein Kennwert (z.B. Schallgeschwindigkeit und/oder mindestens ein akustischer Absorptionswert) bei wenigstens zwei verschiedenen Temperaturen gemessen.

Aus den unterschiedlichen Werten oder auch Spektren, die sich je nach Temperaturabhängigkeit der akustischen Eigenschaften der jeweiligen einzelnen Bestandteile unterscheiden, können Informationen über die Zusammensetzung der Milch erhalten werden.

Die Milch kann hinsichtlich ihrer Qualität geprüft werden, indem die charakteristischen Größen der Zusammensetzung der Milch mit vorgegebenen Referenzgrößen verglichen werden. Es können Grenz- oder auch Mittelwerte bzw. Schwankungsbreiten um die Referenzgrößen herum vorgegeben oder wählbar sein, innerhalb derer die akustischen Kennwerte bzw. abgeleiteten charakteristischen Größen liegen müssen, damit die Milch einem vorgegebenem oder wählbarem Qualitätsstandard genügt.

Es ist bevorzugt, dass wenigstens zwei Qualitätsstufen vergeben werden. Nämlich eine Qualitätsstufe, die qualitativ "gute" Milch kennzeichnet und eine weitere, die "schlechte" oder weniger geeignete Milch kennzeichnet. Weniger geeignete Milch ist beispielsweise Milch, die sinnfällig veränderte Milch aufweist, indem die Milch beispielsweise Mastitisflocken aufweist.

Bei Vergabe nur zweier Qualitätsstufen ist es bevorzugt, dass die "gute" Milch der Weiterverarbeitung zugeführt wird, während die weniger geeignete Milch separat gesammelt bzw. abgeleitet wird. Anschließend kann die weniger geeignete Milch nochmals separat untersucht werden, um die Ursachen zu bestimmen. Diese Milch kann auch direkt verworfen werden, oder auch einem anderen Verarbeitungsprozess zugeführt werden.

Wenn gesetzliche Vorgaben nicht mehr eingehalten werden können, muss die Milch anderweitig verwertet oder entsorgt werden.

Es ist auch bevorzugt, dass der abgeleitete Kennwert mehr als zwei Qualitätsstufen repräsentiert. Beispielsweise ist ein numerischer Kennwert möglich, der als ganze oder Kommazahl bestimmt wird, wobei größere (kleinere) Werte eine höhere (niedrigere) Qualität beschreiben. Bei einer derartigen feineren Qualitätsabstimmung kann "gute" Milch dem normalen Milchverarbeitungsprozess zugeführt werden.

Es kann auch eine Aufteilung in eine Reihe von Qualitätsstufen vorgesehen sein, wie z.B. "gut", "befriedigend", "ausreichend" und "ungenügend".

Dann kann z.B. Milch "befriedigender" Qualitätsstufe noch zur normalen Weiterverarbeitung vorgesehen sein, während z.B. Milch "ausreichender" Qualitätsstufe einem anderen Herstellungsprozess zugeleitet wird, der nicht so hohe Qualitätsanforderungen stellt. Ab einer gewissen Qualitätsminderung (z.B. "mangelhaft" oder "ungenügend") kann die Milch verworfen werden.

Ein Vorteil eines akustischen Verfahrens ist, dass es berührungslos arbeitet. Ein weiterer Vorteil ist die Möglichkeit, qualitative Aussagen über die untersuchte Milch im wesentlichen in Echtzeit zu treffen. In Weiterbildungen können auch quantitative Aussagen über die untersuchte Milch in Echtzeit abgeleitet werden.

Echtzeit bedeutet hier, dass die Milch einer einzelnen Zitze einer Kuh oder die Milch einer Kuh oder einer Gruppe von Kühen innerhalb eines Melkvorganges wenigstens bei Beginn des Melkens untersucht wird.

In einer bevorzugten Weiterbildung wird die Untersuchung kontinuierlich oder auch quasikontinuierlich oder auch periodisch durchgeführt. Eine zeitaufgelöste Messung während des Anmelkens oder auch eines Teils des Melkvorgangs oder im wesentlichen dem gesamten Melken bietet den Vorteil, dass die Milch unmittelbar qualitativ oder auch quantitativ charakterisiert bzw. geprüft wird. Ein weiterer Vorteil liegt darin, dass die Milch geprüft wird, ohne dass im wesentlichen der Melkvorgang beeinträchtigt oder verzögert wird.

In einer Ausgestaltung des erfindungsgemäßen Verfahrens wird jeweils die Schallgeschwindigkeit und/oder ein akustischer Absorptionswert bzw. ein akustischer Absorptionsspektrum bei wenigstens einer Temperatur bestimmt. Erfindungsgemäß wird bei zwei verschiedenen Temperaturen gemessen.

Da die akustischen Eigenschaften der einzelnen Bestandteile in Milch bei unterschiedlichen Temperaturen verschieden sind, lässt sich hiermit das Auflösungsvermögen steigern. Vorzugsweise sind die verschiedenen Temperaturen einstellbar oder vorgegeben.

Es kann auch nach oder schon während der Messung bei einer ersten Temperatur Wärme zu- oder abgeführt werden, sodass sich eine zweite Temperatur einstellt, die von unterschiedlichen Faktoren abhängt, wie z.B. der Umgebungstemperatur und der Milchflussmenge. Durch eine weitere Temperaturmessung kann die sich ergebende zweite Messtemperatur bestimmt werden bzw. ein charakteristischer Wert dafür abgeleitet werden. Durch Vergleich mit bekannten Werten, die z.B. in einer Tabelle abgelegt sind, können dann die Messwerte und Kennwerte bestimmt werden (auch z.B. über ein Inter- oder Extrapolationsverfahren).

Das ist z.B. dadurch möglich, dass zwei Messkammern hintereinander angeordnet sind. Nach dem Verlassen der ersten Messkammer kann die zur zweiten Messkammer weitergeleitete Milch um ein vorgegebenes Maß aufgeheizt (oder abgekühlt) werden, indem z.B. die Leitung (z.B. elektrisch) beheizt wird. Möglich ist es auch, dass statt dessen oder zusätzlich die zweite Messkammer beheizt oder gekühlt wird, so dass die Milch in der zweiten Messkammer eine andere Temperatur aufweist als die in der ersten. Zur Kühlung kann z.B. eine Einrichtung mit einem oder mehreren Peltierelement(en) verwendet werden.

Die Messkammern können auch parallel zueinander angeordnet sein, wobei eine dann z.B. beheizt (oder gekühlt) wird und die andere nicht. Es kann auch sein, dass beide Zuleitungen beheizt (gekühlt) werden, wobei eine Zuleitung oder auch Messkammer stärker beheizt (gekühlt) wird als die andere. Durch solche oder ähnliche Maßnahmen können die Messtemperaturen aufgeprägt werden, um bei vorgegebenen Messtemperaturen zu messen.

Es ist besonders vorteilhaft, den Milchstrom in mindestens zwei Teilströme aufzuteilen, die auf unterschiedliche Temperaturen gebracht werden und jeweils hinsichtlich ihren akustischen Eigenschaften, insbesondere das Absorptionsvermögen analysiert werden.

Durch die Wahl geeigneter Messstellen und auch Zu- bzw. Ableitungen wird auch bei paralleler Anordnung und selbst bei einer zeitlichen Veränderung der Zusammensetzung der Milch im wesentliche die gleiche Milch untersucht. Dadurch werden Ungenauigkeiten bei der Messung aufgrund von zeitlichen Fluktuationen in der Zusammensetzung der Milch, die sich entlang der Milchleitung manifestieren, vermieden.

In einer bevorzugten Weiterbildung der Erfindung werden einmalig bei Herstellung oder regelmäßig in vorbestimmten oder wählbaren Abständen oder dergleichen Referenzgrößen zur Erfassung der Übertragungsfunktion des akustischen Systems aufgenommen. Mit Hilfe von Referenzgrößen kann der Einfluss der Übertragungsfunktion der akustischen Sendeinrichtung oder des akustischen Systems auf die Messergebnisse herausgerechnet werden. Geeignet als Referenzgröße ist beispielsweise ein Referenzspektrum.

Sinnvoll kann eine Messung mehrer Spektren bzw. Spektralwerte sein, da bestimmte Inhaltsstoffe in Milch zwar gut in dem einen Spektrum jedoch nur schlecht in dem anderen Spektrum erkennbar sein können. Hierbei kann ein zusätzliches Spektrum gemessen werden und/oder die Messung der Schallgeschwindigkeit bei unterschiedlichen Frequenzen und/oder die Bestimmung eines Dispersionsspektrums und/oder die Messung der Phasengeschwindigkeit von Schall in Milch und/oder die Messung der frequenzaufgelösten Gruppengeschwindigkeit von Schall in Milch erfolgen.

Vorteilhaft ist eine Messung bei mindestens zwei Frequenzen, da einige Inhaltsstoffe der Milch bei einer Frequenz zwar gut, jedoch nur schlecht bei einer anderen Frequenz erkennbar sind.

Bei der erfindungsgemäßen Vorrichtung sind der Sender, die Messkammer und der Empfänger vorzugsweise in einem akustischen Strahlengang angeordnet, und der Sender und der Empfänger sind vorzugsweise mit einer Steuereineinrichtung verbunden.

Mit Hilfe des akustischen Systems wird die Schallgeschwindigkeit und ein akustisches Absorptionsspektrum aufgenommen und mit Hilfe eines Komparators werden die charakteristischen Größen, die aus dem akustischen Absorptionsspektrum gewonnen werden, mit vorgegebenen Referenzgrößen verglichen. Durch den Vergleich wird festgestellt, ob die untersuchte Milch dem vorgegebenen Milchstandard genügt.

In einer vorteilhaften Ausgestaltung der erfindungsgemäßen Vorrichtung sind mindestens ein Heizelement zur Temperierung der Milch und mindestens ein Thermometereinrichtung mit wenigstens einer Messkammer verbunden. Mit dem Heizelement und der Thermometereinrichtung wird eine gewünschte Temperatur eingestellt und kann auch nachgeregelt werden.

Mit einer weiteren vorteilhaften Ausgestaltung der Erfindung sind mindestens zwei Messkammem mit jeweils einem Heizelement und jeweils einer Thermometereinrichtungen (wie beispielsweise ein Thermoelement oder ein temperaturabhängiger Widerstand oder dergleichen mehr) über getrennte Leitungen mit einer Hauptleitung verbunden.

Bei Messung der akustischen Eigenschaften bei mindestens zwei Temperaturen werden erfindungsgemäß zusätzliche Informationen über die Milch erfasst.

Vorzugsweise wird der Melkvorgang in Abhängigkeit von charakteristischen, akustischen Größen gesteuert. Beispielsweise werden Milchströme von Tieren mit sinnfällig veränderter Milch von der Milchhauptleitung ferngehalten und abgeführt, der Tierhalter über den Zustand bzw. die Qualität der Milch eines einzelnen Tieres informiert, oder die Nahrung bzw. die Medikamentierung eines einzelnen Tieres entsprechend der charakteristischen, akustischen Größen der Milch angepasst.

In einer bevorzugten Weiterbildung wird die Zusammensetzung der Milch, insbesondere hinsichtlich ihrer wässrigen Bestandteile im Verhältnis zum Fettgehalt bzw. zu den in der Milch gelösten Feststoffen wie Salze, wenigstens teilweise bestimmt. Dazu können zusätzlich auch Verfahren eingesetzt werden, die z.B. den Leitwert- nutzen oder es kann über Dichtemessungen oder optische Verfahren, mit denen sich farbliche Veränderungen der Milch feststellen lassen, die Anteile bestimmt werden. Auch Siebe, um den Gehalt an Flocken in der Milch zu bestimmen, können verwendet werden.

Nach einer weiteren vorteilhaften Ausgestaltung der Vorrichtung wird vorgeschlagen, dass eine Steuereinrichtung wenigstens zur Steuerung der Messeinrichtung vorgesehen ist. Die Steuereinrichtung kann auch zur Steuerung der Vorrichtung und/oder zum Auslösen oder zum Beenden von Verfahrensschritten während eines Melkvorgangs dienen.

Weitere Vorteile und bevorzugte Ausgestaltungen werden anhand der folgenden Figuren erläutert. Diese verdeutlichen exemplarisch einige Bestandteile der Erfindung beispielhaft. Darin zeigen:
- Fig. 1: Eine erfindungsgemäße Melkvorrichtung mit Qualitätsprüfung,
- Fig. 2: eine erfindungsgemäße Anordnung von zwei Messkammern mit zwei getrennten Leitungen.
- Fig. 3: Messergebnisse der Schallgeschwindigkeit und der Absorption normaler Milch über der Temperatur, und
- Fig. 4: Messergebnisse der Schallgeschwindigkeit und der Absorption sinnfällig veränderter Milch über der Temperatur.

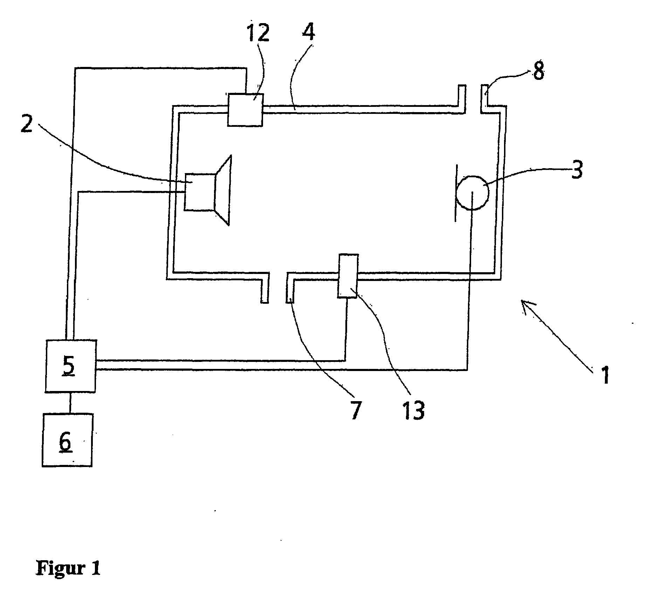

Im Ausführungsbeispiel wird ein akustisches System 1 zur Beurteilung der Qualität von Milch beim Melken verwendet, wie es in Figur 1 dargestellt ist. Zum Melken werden die Melkbecher (nicht dargestellt) einer insofern konventionellen Melkvorrichtung an die Zitzen einer Kuh angeschlossen. Mit dem Anmelken füllt sich die Milchleitung (nicht dargestellt) mit Milch.

Das in Fig. 1 dargestellte akustische System 1 weist eine Messkammer 4, einen Sender 2 und einen Empfänger 3 auf. Milch wird über einen Einlass 7 in die Messkammer 4 eingeleitet und über einen Auslass 8 abgeführt. Hierdurch wird eine kontinuierliche Charakterisierung von Milch im Durchflussverfahren ermöglicht.

Die mit Milch befüllte Messkammer 4 wird mit Hilfe eines Heizelementes 12 und eines Thermometers 13 auf eine gewünschte Temperatur gebracht bzw. gehalten.

Der Sender 2, der Empfänger 3, das Heizelement 12 und das Thermometer 13 sind mit einer Steuereinheit 5 verbunden. Der Sender 2 emittiert Schall mit definierter Intensität bei vorgegebener Frequenz. Der Empfänger 3 nimmt diesen Schall, der durch die in der Messkammer 4 vorhandene Milch läuft, auf. Durch Quotientenbildung des aufgenommenen Signals durch das emittierte Signal in Abhängigkeit der emittierten Schallfrequenz wird ein akustisches Absorptionsspektrum ermittelt.

Aus dem akustischen Absorptionsspektrum werden charakteristische Größen von Milch ermittelt, wie z.B. ihre Zusammensetzung oder auch Größen, welche die Sinnfälligkeit der Milch beschreiben.

Diese Größen werden an einen Komparator 6 weitergegeben, der diese mit vorgegebenen Referenzwerten vergleicht und damit die gemessene Milch hinsichtlich ihrer Qualität einstuft.

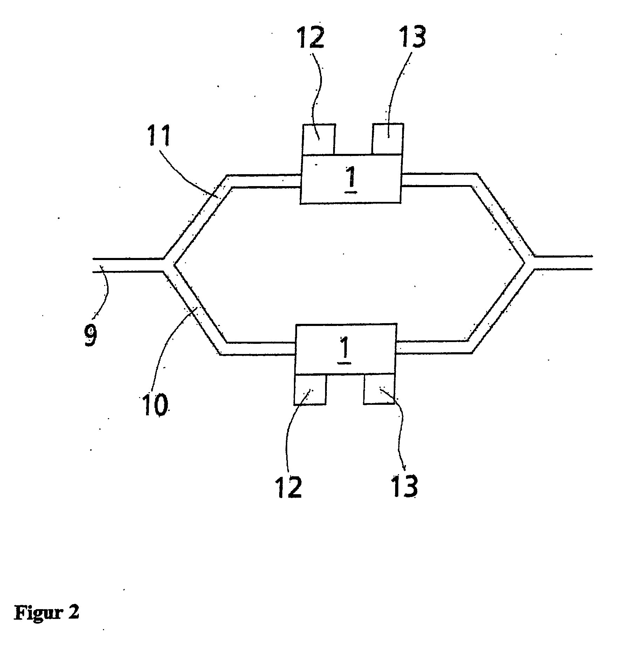

Fig. 2 zeigt zwei akustische Systeme 1, die jeweils mit einem Heizelement 12 und einem Thermometer 13 ausgestattet sind, um die Systeme jeweils auf einer vorgegebenen oder wählbaren Temperatur halten zu können.

Die in einer Hauptleitung 9 zufließende Milch wird in zwei Teilströme aufgeteilt, die jeweils in zwei getrennten Leitungen 10, 11 durch zwei verschieden temperierte Messkammern fließen mit jeweils einem akustischen System. In den Messkammern 4 werden die Teilströme untersucht.

Mit Hilfe dieser Anordnung ist es möglich, dem Hauptmilchstrom an derselben Stelle zwei Teilmilchströme zu entnehmen und diese zu untersuchen, wobei ein fehlerhafter Vergleich beispielsweise von Milch am Anfang eines Gemelkes mit Milch von dem Ende des Gemelks vermieden wird.

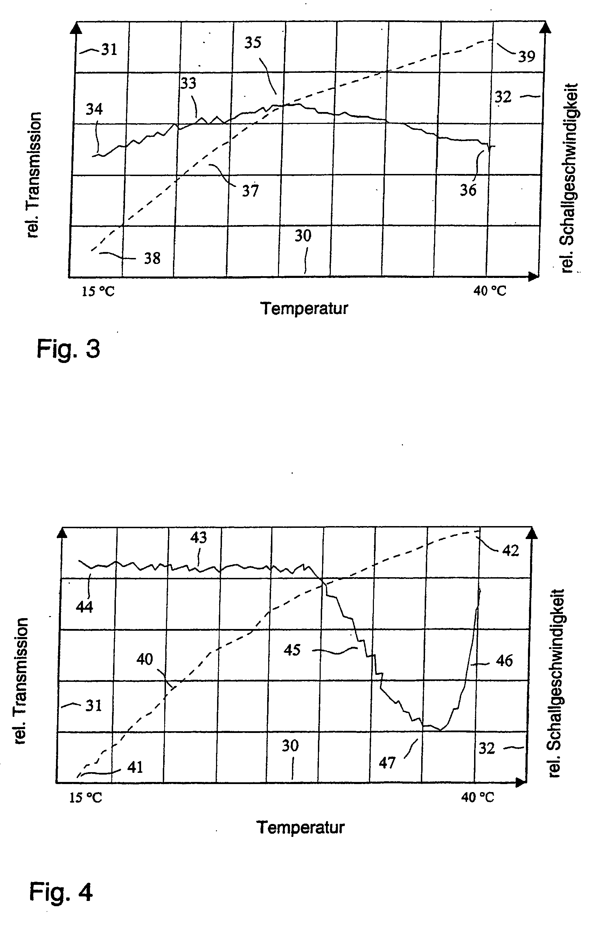

In Figur 3 sind Messwerte an normaler Milch guter Qualitätsstufe, die keinerlei sinnfällige Veränderungen zeigt, aufgetragen. Über der Temperatur 30 der Milch ist (linke Ordinate) die relative Transmission 31 der Probe aufgetragen. Auf der rechten Seite repräsentiert die Ordinate die relative Schallgeschwindigkeit 32 der Probe.

In dem Temperaturbereich relativ geringer Temperaturen 34 bei etwa 15 °C ist die Absorption stärker als in einem mittleren Temperaturbereich bei etwa 25 bis 30 °C, in dem das Maximum 35 der Transmission liegt. Zu höheren Temperaturen 36 fällt die Transmission wieder ab und liegt bei etwa 40 °C wiederum bei Werten wie bei 15 °C. Im konkreten Messfall betrug die Transmission im Maximum 35 etwa 66 % und an den Randbereichen der Messung etwa 64 %.

Der Verlauf der relativen Schallgeschwindigkeit 37 ist gleichfalls in Fig. 3 über der Temperatur aufgetragen. Von niedrigen Temperaturen 38 steigt die Schallgeschwindigkeit zu den höheren Temperaturen 39 an, wobei die Steigung mit zunehmender Temperatur geringer wird.

Für die in Figuren 3 und 4 dargestellten Messwerte wurden die Messungen mit einer Frequenz von 2 MHz durchgeführt. Doch auch erheblich höhere und niedrige Frequenzen sind für die Messung möglich.

In Fig. 4 sind die Verläufe der relativen Schallgeschwindigkeit 40 und der relativen Transmission 43 über der Temperatur bei sinnfällig veränderter Milch aufgetragen. Hier lag die Flockengröße der Milch an Mastitis erkrankter Tiere im wesentlichen im Größenbereich bis etwa 2 mm.

Im unteren und mittleren Temperaturbereich zwischen etwa 15 °C bis etwa knapp 30 °C ändert sich die Absorption mit der Temperatur näherungsweise nicht, während ab einer Temperatur von etwa 28 °C zu höheren Temperaturen hin die Absorption steigt und somit über der linken Flanke 45 die Transmission mit zunehmender Temperatur bis zum Minimum 47 fällt.

Im Minimum 47, das zwischen 35 °C und 38 °C liegt, beträgt die Transmission hier im Beispiel etwa 62 %, während die Transmission im niedrigen Temperaturbereich 44 etwa 67 % beträgt. Zu höheren Temperaturen steigt die Transmission auf der rechten Flanke 46 wieder an.

Damit ist insbesondere bei üblichen Melktemperaturen ein ganz erheblicher Unterschied des Absorptionsverhaltens von flockiger Milch im Vergleich zu normaler Milch sichtbar. Aber auch bei niedrigen und hohen Temperaturen sind deutliche Unterschiede zu erkennen.

Bei normaler Milch beträgt die Transmission hingegen bei etwa 36 °C zwischen 65 und 66 %, während die Transmission flockiger Milch 62 % beträgt. Daraus folgt, dass auch die Messung der Transmission bei nur einer einzigen Temperatur, nämlich beispielsweise 36 °C, ausreicht, um die Qualität der Milch zu bestimmen.

Möglich ist z.B. die Aussonderung von Milch, deren Transmission unter einen vorbestimmten Transmissionswert (z.B. 64 % oder 65 %) bei einer vorbestimmten Temperatur (z.B. 36 °C) fällt.

Möglich ist auch die Verifikation bei einer zweiten Temperatur. So kann eine zweite Messung z.B. bei einer niedrigen Temperatur von 15 °C durchgeführt werden. Die flockige Milch hat dabei eine höhere Transmission von etwa 67 %, während normale Milch nur etwa 64 % Transmission aufweist.

Auch die Messung der Schallgeschwindigkeit eignet sich für die Qualitätsprüfung. Der Verlauf 40 der Schallgeschwindigkeit über der Temperatur 30 bei sinnfälliger Milch ist steiler. Die Schallgeschwindigkeit sinnfälliger Milch ist im geringeren Temperaturbereich 41 bei etwa 15 °C geringer als die entsprechende Schallgeschwindigkeit normaler Milch. Umgekehrt ist die Schallgeschwindigkeit sinnfällig veränderter Milch im hohen Temperaturbereich 42 größer als die Schallgeschwindigkeit normaler Milch im gleichen Temperaturbereich 39. Auch die Bestimmung der Schallgeschwindigkeit erlaubt somit die zuverlässige Detektion sinnfällig veränderter Milch.

Dies gilt erst recht bei Messung zweier verschiedener Temperaturen. Sowohl die Schallgeschwindigkeit als auch die Transmission weisen deutliche Temperaturabhängigkeiten auf, die sich zur qualitativen und auch zur quantifizierten Beurteilung von Milch verwenden lassen.

Sinnfällig veränderte Milch und insbesondere Milch einer an Mastitis erkrankten Kuh bildet Flocken, so dass die Milch als ein Zwei-Stoffgemisch vorliegt. Dadurch, dass sich bestimmte Bestandteile in den Flocken konzentrieren, ändert sich in der wässrigen Phase die Zusammensetzung. Dadurch werden die akustischen Eigenschaften beider Phasen beeinflusst.

Ein Vorteil der Messung einer akustischen Eigenschaft gegenüber der Messung einer optischen Eigenschaft ist weiterhin, dass sich die Milch in ihrer Farbe je nach Jahreszeit, Futter- oder auch Tierart unterscheiden kann. Bei optischen Messverfahren können derartige farbliche Unterschiede Messunterschiede bewirken, die eine Beurteilung der Messergebnisse erschweren und die Messgenauigkeit verschlechtern können.

In weiteren Ausgestaltungen können die Messwerte und akustisch bestimmten Parameter und Kennwerte auch zur Analyse der Milchinhaltsstoffe verwendet werden. Beispielsweise kann der Fettanteil und der Anteil an Proteinen bestimmt werden. Weiterhin können weitere Bestandteile der Milch bestimmt werden, wie es mit im Stand der Technik bekannten Milchanalysevorrichtungen möglich ist. Dann kann eine aufwendige Analyse in der Molkerei unterbleiben.

Die zur Messung verwendete akustische Leistung ist vorzugsweise so gering, dass die Milch im wesentlichen nicht geschädigt wird. Für das akustische System bzw. den Sender kann ein Piezo―Stack oder dergleichen verwendet werden, der vorzugsweise mit geringen Spannungen arbeitet, damit auch bei eventuellen Fehlfunktionen und Schäden die zu melkenden Tiere nicht geschädigt werden. Vorzugsweise ist die Spannung kleiner 50 V).

Zum Ausgasen der Luftblasen kann eine Beruhigungstrecke zur Messkammer vorgesehen sein oder es können weitere konstruktive Maßnahmen vorgesehen sein, um Luftblasen wenigstens zum Teil aus der Milch zu entfernen, welche die Messergebnisse stören könnten. Auch eine Homogenisierung der Milch im Messvolumen oder der ermolkenen Milch kann bessere Messergebnisse liefern.

Als weiterer Kennwert zur Qualitätsbestimmung der Milch kann auch ein Maß für die akustische Impedanz abgeleitet werden.

### Bezugszeichenliste

- 1: akustisches System
- 2: Sender
- 3: Empfänger
- 4: Messkammer
- 5: Steuereinheit
- 6: Komparator
- 7: Einlass
- 8: Auslass
- 9: Hauptleitung
- 10, 11: Leitung
- 12: Heizelement
- 13: Thermometer
- 30: Temperatur
- 31: relative Transmission
- 32: relative Schallgeschwindigkeit
- 33: Absorptionsverlauf
- 34: niedriger Temperaturbereich
- 35: Maximum
- 36: hoher Temperaturbereich
- 37: Schallgeschwindigkeitsverlauf
- 38: niedriger Temperaturbereich
- 39: hoher Temperaturbereich
- 40: Schallgeschwindigkeitsverlauf
- 41: niedriger Temperaturbereich
- 42: hoher Temperaturbereich
- 43: Absorptionsverlauf
- 44: niedriger Temperaturbereich
- 45: linke Flanke
- 46: rechte Flanke
- 47: Minimum

## Patentansprüche

1. Melkverfahren mit qualitativer Charakterisierung von Milch
bei welchem wenigstens zeitweise bei dem Melken wenigstens ein Teil der Milch untersucht wird, um die Qualität der Milch zu bestimmen,
indem wenigstens ein akustisches Sendesignal ausgestrahlt wird,
wenigstens ein Empfangssignal aufgenommen wird, und
aus dem wenigstens einem Empfangssignal wenigstens ein Kennwert bei wenigstens zwei Temperaturen abgeleitet wird, welcher die Qualität der Milch charakterisiert.

2. Melkverfahren mit nach Anspruch 1, bei dem wenigstens ein Sendesignal umfassend zwei Frequenzen ausgestrahlt wird,
wenigstens ein Empfangssignal aufgenommen wird, und
aus dem wenigstens einem Empfangssignal wenigstens ein Kennwert abgeleitet wird, welcher die Qualität der Milch charakterisiert.

3. Melkverfahren nach Anspruch 1 oder 2,
**dadurch gekennzeichnet, dass** wenigstens einer dieses wenigstens einen Kennwertes die Qualität der Milch in bezug auf wenigstens einen sinnfällig veränderten Bestandteil charakterisiert.

4. Melkverfahren nach Anspruch 1, 2 oder 3,
**dadurch gekennzeichnet, dass** aus dem Empfangssignal wenigstens ein Kennwert abgeleitet wird, der eine akustische Eigenschaft der Milch charakterisiert.

5. Melkverfahren nach mindestens einem der vorhergehenden Ansprüche,
**dadurch gekennzeichnet, dass** wenigstens ein akustischer Absorptionskennwert der Milch gemessen wird.

6. Melkverfahren nach mindestens einem der vorhergehenden Ansprüche,
**dadurch gekennzeichnet, dass** das Sendesignal wenigstens einen Spektralbereich umfasst.

7. Melkverfahren nach mindestens einem der vorhergehenden Ansprüche,
**dadurch gekennzeichnet, dass** wenigstens ein Kalibrierungskennwert bestimmt wird.

8. Melkverfahren nach mindestens einem der vorhergehenden Ansprüche,
**dadurch gekennzeichnet, dass** wenigstens ein Kennwert abgeleitet wird, welcher ein charakteristisches Maß für die Schallgeschwindigkeit ist.

9. Melkverfahren nach mindestens einem der vorhergehenden Ansprüche,
**dadurch gekennzeichnet, dass** wenigstens ein Absorptionsspektrum bestimmt wird.

10. Melkverfahren nach mindestens einem der vorhergehenden Ansprüche,
**dadurch gekennzeichnet, dass** wenigstens ein Temperaturkennwert abgeleitet wird, welcher charakteristisch für die Temperatur der zu messenden Milch ist.

11. Melkverfahren nach mindestens einem der vorhergehenden Ansprüche,
**dadurch gekennzeichnet, dass** wenigstens eine Temperatur einstellbar ist.

12. Melkverfahren nach mindestens einem der vorhergehenden Ansprüche,
**dadurch gekennzeichnet, dass** wenigstens ein Kennwert mit wenigstens einem Referenzkennwert verglichen wird.

13. Melkverfahren nach mindestens einem der vorhergehenden Ansprüche,
**dadurch gekennzeichnet, dass** die Schallgeschwindigkeit in Abhängigkeit von der Frequenz und/oder die Phasengeschwindigkeit von Schall in Milch in Abhängigkeit von der Schallfrequenz und/oder die frequenzaufgelöste Gruppengeschwindigkeit von Schall in Milch in Abhängigkeit von der Schallfrequenz gemessen werden.

14. Melkverfahren nach mindestens einem der vorhergehenden Ansprüche,
**dadurch gekennzeichnet, dass** die zu untersuchende Milch in wenigstens zwei Teile aufgeteilt wird, und bei unterschiedlichen Temperaturen jeweils hinsichtlich ihrer akustischen Eigenschaften analysiert werden.

15. Melkverfahren nach Anspruch 14, **dadurch gekennzeichnet,**
**dass** wenigstens zwei unterschiedliche Teile der zu untersuchenden Milch im wesentlichen gleichzeitig untersucht werden.

16. Melkverfahren nach mindestens einem der vorhergehenden Ansprüche,
**dadurch gekennzeichnet, dass** wenigstens ein Teil der zu untersuchenden Milch im wesentlichen zeitlich nacheinander bei einer ersten und einer zweiten Temperatur untersucht werden.

17. Melkverfahren nach mindestens einem der vorhergehenden Ansprüche,
**dadurch gekennzeichnet, dass** Referenzgrößen zur Erfassung einer akustischen Übertragungsfunktion aufgenommen werden.

18. Melkverfahren nach mindestens einem der vorhergehenden Ansprüche, **dadurch gekennzeichnet, dass** der Melkvorgang in Abhängigkeit von dem wenigstens einen Kennwert gesteuert wird.

19. Vorrichtung zum Melken mit qualitativer Charakterisierung von Milch mit
wenigstens einer Auswerteeinrichtung und wenigstens einer Messeinrichtung, welche wenigstens eine Messkammer (4), wenigstens eine akustische Sendeeinrichtung (2) und wenigstens eine Empfangseinrichtung (3) umfasst, wobei in die wenigstens eine Messkammer (4) wenigstens ein Teil der ermolkenen Milch ableitbar ist;
mit der wenigstens einen akustischen Sendeeinrichtung (2) wenigstens ein akustisches Sendesignal ausstrahlbar ist;
und mit der wenigstens einen Empfangseinrichtung (3) wenigstens ein Empfangssignal aufnehmbar ist, welches durch wenigstens eine akustische Eigenschaft der Milch beeinflusst ist;
wobei die wenigstens eine Auswerteeinrichtung (6) dazu geeignet ist, aus dem wenigstens einen Empfangssignal einen Kennwert abzuleiten, welcher die Qualität der Milch charakterisiert;
und wobei wenigstens zwei Messkammern (4) vorgesehen sind, die so ausgebildet sind, dass die Messung bei zwei verschiedenen Temperaturen erfolgt.

20. Vorrichtung nach Anspruch 19 **gekennzeichnet durch** wenigstens eine Sendeeinrichtung und wenigstens eine Empfangseinrichtung zum Senden bzw. Empfangen eines akustischen Sendesignals mit wenigstens zwei Frequenzen.

21. Vorrichtung nach Anspruch 19 oder 20, **dadurch gekennzeichnet, dass** die Auswerteeinrichtung (6) dazu geeignet ist, aus dem wenigstens einem Empfangssignal wenigstens einen Kennwert abzuleiten, der die Qualität der Milch in bezug auf wenigstens einen sinnfällig veränderten Bestandteil charakterisiert, **dadurch gekennzeichnet, dass** wenigstens zwei Messkammern (4) vorgesehen sind, die so ausgebildet sind, dass die Messung bei zwei verschiedenen Temperaturen erfolgt.

22. Vorrichtung nach mindestens einem der Ansprüche 19 bis 21,
**dadurch gekennzeichnet, dass** wenigstens eine Temperatutmesseinrichtung (13) vorgesehen ist, mit welcher eine Messtemperatur aufnehmbar ist.

23. Vorrichtung nach mindestens einem der Ansprüche 19 bis 22,
**dadurch gekennzeichnet, dass** wenigstens eine Heizeinrichtung (12) und/oder Kühleinrichtung an dieser Messeinrichtung vorgesehen ist.

24. Vorrichtung nach mindestens einem der Ansprüche 19 bis 23,
**dadurch gekennzeichnet, dass** die Frequenz des abgestrahlten Sendesignals im Bereich zwischen 500 kHz und 200 MHz liegt.

25. Vorrichtung nach mindestens einem der Ansprüche 19 bis 24,
**dadurch gekennzeichnet, dass** wenigstens zwei Messkammern (4) vorgesehen sind.

26. Vorrichtung nach mindestens einem der Ansprüche 20 bis 25,
**dadurch gekennzeichnet, dass** ein Kennwert für eine Partirkelzahl im Größenbereich 0,1 mm bis 4 mm ableitbar ist.

27. Vorrichtung nach einem der Ansprüche 20 bis 26, **dadurch gekennzeichnet, dass** eine Steuereinrichtung wenigstens zur Steuerung der Messeinrichtung vorgesehen ist.

## Claims

1. Milking method with a qualitative characterization of milk,
in which at least some of the milk is examined at least occasionally during the milking process, in order to determine the quality of the milk,
by emitting at least one acoustic transmission signal,
receiving at least one received signal, and
deriving at least one characteristic value, which characterizes the quality of the milk, from the at least one received signal at at least two temperatures.

2. Milking method according to Claim 1, in which at least one transmission signal comprising two frequencies is emitted,
at least one received signal is received, and
at least one characteristic value, which characterizes the quality of the milk, is derived from the at least one received signal.

3. Milking method according to Claim 1 or 2, **characterized in that** at least one of this at least one characteristic value characterizes the quality of the milk with respect to at least one obviously changed component.

4. Milking method according to Claim 1, 2 or 3, **characterized in that** at least one characteristic value, which characterizes an acoustic property of the milk, is derived from the received signal.

5. Milking method according to at least one of the preceding claims, **characterized in that** at least one acoustic absorption characteristic value of the milk is measured.

6. Milking method according to at least one of the preceding claims, **characterized in that** the transmission signal comprises at least one spectral range.

7. Milking method according to at least one of the preceding claims, **characterized in that** at least one calibration characteristic value is determined.

8. Milking method according to at least one of the preceding claims, **characterized in that** at least one characteristic value, which is a characteristic measure of the speed of sound, is derived.

9. Milking method according to at least one of the preceding claims, **characterized in that** at least one absorption spectrum is determined.

10. Milking method according to at least one of the preceding claims, **characterized in that** at least one temperature characteristic value, which is characteristic of the temperature of the milk to be measured, is derived.

11. Milking method according to at least one of the preceding claims, **characterized in that** at least one temperature can be set.

12. Milking method according to at least one of the preceding claims, **characterized in that** at least one characteristic value is compared with at least one reference characteristic value.

13. Milking method according to at least one of the preceding claims, **characterized in that** the speed of sound is measured on the basis of the frequency and/or the phase velocity of sound in milk is measured on the basis of the sound frequency and/or the frequency-resolved group velocity of sound in milk is measured on the basis of the sound frequency.

14. Milking method according to at least one of the preceding claims, **characterized in that** the milk to be examined is divided into at least two parts and their acoustic properties are respectively analysed at different temperatures.

15. Milking method according to Claim 14, **characterized in that** at least two different parts of the milk to be examined are essentially examined at the same time.

16. Milking method according to at least one of the preceding claims, **characterized in that** at least some of the milk to be examined is essentially examined in temporal succession at a first and a second temperature.

17. Milking method according to at least one of the preceding claims, **characterized in that** reference variables for detecting an acoustic transfer function are recorded.

18. Milking method according to at least one of the preceding claims, **characterized in that** the milking operation is controlled on the basis of the at least one characteristic value.

19. Milking device with a qualitative characterization of milk, said device having
at least one evaluation device and at least one measuring device, which comprises at least one measuring chamber (4), at least one acoustic transmitting device (2) and at least one receiving device (3), at least some of the milk which has been milked being able to be discharged into the at least one measuring chamber (4);
the at least one acoustic transmitting device (2) being able to be used to emit at least one acoustic transmission signal;
and the at least one receiving device (3) being able to be used to receive at least one received signal which is influenced by at least one acoustic property of the milk;
the at least one evaluation device (6) being suitable for deriving a characteristic value, which characterizes the quality of the milk, from the at least one received signal;
and provision being made of at least two measuring chambers (4) which are designed in such a manner that the measurement is carried out at two different temperatures.

20. Device according to Claim 19, **characterized by** at least one transmitting device and at least one receiving device for transmitting and receiving an acoustic transmission signal at at least two frequencies.

21. Device according to Claim 19 or 20, **characterized in that** the evaluation device (6) is suitable for deriving at least one characteristic value, which characterizes the quality of the milk with respect to at least one obviously changed component, from the at least one received signal, **characterized in that** provision is made of at least two measuring chambers (4) which are designed in such a manner that the measurement is carried out at two different temperatures.

22. Device according to at least one of Claims 19 to 21, **characterized in that** provision is made of at least one temperature-measuring device (13) which can be used to record a measurement temperature.

23. Device according to at least one of Claims 19 to 22, **characterized in that** at least one heating device (12) and/or cooling device is/are provided in this measuring device.

24. Device according to at least one of Claims 19 to 23, **characterized in that** the frequency of the emitted transmission signal is in the range of from 500 kHz to 200 MHz.

25. Device according to at least one of Claims 19 to 24, **characterized in that** at least two measuring chambers (4) are provided.

26. Device according to at least one of Claims 20 to 25, **characterized in that** it is possible to derive a characteristic value for a particle number in the size range of from 0.1 mm to 4 mm.

27. Device according to one of Claims 20 to 26, **characterized in that** a control device at least for controlling the measuring device is provided.

## Revendications

1. Procédé de traite avec caractérisation qualitative du lait avec lequel au moins une partie du lait est analysée au moins par intermittence au cours de la traite afin de déterminer la qualité du lait, avec lequel au moins un signal sonore est émis, au moins un signal reçu est enregistré et au moins une valeur caractéristique est dérivée de l'au moins un signal reçu à au moins deux températures, laquelle caractérise la qualité du lait.

2. Procédé de traite selon la revendication 1, avec lequel au moins un signal émis comprenant deux fréquences est émis, au moins un signal reçu est enregistré et au moins une valeur caractéristique est dérivée de l'au moins un signal reçu, laquelle caractérise la qualité du lait.

3. Procédé de traite selon la revendication 1 ou 2, **caractérisé en ce qu'**au moins l'une de la ou des valeurs caractéristiques caractérise la qualité du lait en référence à au moins une composante qui varie de manière évidente.

4. Procédé de traite selon la revendication 1, 2 ou 3, **caractérisé en ce que** du signal reçu est dérivée au moins une valeur caractéristique qui caractérise une caractéristique acoustique du lait.

5. Procédé de traite selon au moins l'une des revendications précédentes, **caractérisé en ce qu'**au moins une valeur caractéristique d'absorption acoustique du lait est mesurée.

6. Procédé de traite selon au moins l'une des revendications précédentes, **caractérisé en ce que** le signal émis comprend au moins une plage spectrale.

7. Procédé de traite selon au moins l'une des revendications précédentes, **caractérisé en ce qu'**au moins une valeur caractéristique de calibrage est déterminée.

8. Procédé de traite selon au moins l'une des revendications précédentes, **caractérisé en ce qu'**est dérivée au moins une valeur caractéristique qui est une mesure caractéristique de la vitesse du son.

9. Procédé de traite selon au moins l'une des revendications précédentes, **caractérisé en ce qu'**au moins un spectre d'absorption est déterminé.

10. Procédé de traite selon au moins l'une des revendications précédentes, **caractérisé en ce qu'**est dérivée au moins une valeur caractéristique de température qui est caractéristique de la température du lait à mesurer.

11. Procédé de traite selon au moins l'une des revendications précédentes, **caractérisé en ce qu'**au moins une température est réglable.

12. Procédé de traite selon au moins l'une des revendications précédentes, **caractérisé en ce qu'**au moins une valeur caractéristique est comparée avec au moins une valeur caractéristique de référence.

13. Procédé de traite selon au moins l'une des revendications précédentes, **caractérisé en ce que** la vitesse du son est mesurée en fonction de la fréquence et/ou la vitesse de phase du son dans le lait en fonction de la fréquence du son et/ou la vitesse de propagation de groupe avec résolution en fréquence du son dans le lait en fonction de la fréquence du son.

14. Procédé de traite selon au moins l'une des revendications précédentes, **caractérisé en ce que** le lait à analyser est divisé en au moins deux parties dont les caractéristiques acoustiques sont respectivement analysées à des températures différentes.

15. Procédé de traite selon la revendication 14, **caractérisé en ce qu'**au moins deux parties différentes du lait à analyser sont analysées pour l'essentiel simultanément.

16. Procédé de traite selon au moins l'une des revendications précédentes, **caractérisé en ce qu'**au moins une partie du lait à analyser est analysée à une première et à une deuxième températures pour l'essentiel successivement.

17. Procédé de traite selon au moins l'une des revendications précédentes, **caractérisé en ce que** des grandeurs de référence destinées à déterminer une fonction de transfert acoustique sont enregistrées.

18. Procédé de traite selon au moins l'une des revendications précédentes, **caractérisé en ce que** l'opération de traite est commandée en fonction de l'au moins une valeur caractéristique.

19. Dispositif de traite avec caractérisation qualitative du lait comprenant au moins un dispositif d'interprétation et au moins un dispositif de mesure, lequel comprend au moins une chambre de mesure (4), au moins un dispositif émetteur acoustique (2) et au moins un dispositif récepteur (3), au moins une partie du lait trait pouvant être déviée dans l'au moins une chambre de mesure (4) ; au moins un signal émis sonore pouvant être émis avec l'au moins un dispositif émetteur acoustique (2) ; et au moins un signal reçu pouvant être enregistré avec l'au moins un dispositif récepteur (3), lequel est influencé par au moins une caractéristique acoustique du lait, l'au moins un dispositif d'interprétation (6) étant conçu pour dériver de l'au moins un signal reçu une valeur caractéristique qui caractérise la qualité du lait, et au moins deux chambres de mesure (4) étant prévues, lesquelles sont configurées de telle sorte que la mesure s'effectue à deux températures différentes.

20. Dispositif selon la revendication 19, **caractérisé par** au moins un dispositif émetteur et au moins un dispositif récepteur pour émettre ou recevoir un signal émis sonore à au moins deux fréquences.

21. Dispositif selon la revendication 19 ou 20, **caractérisé en ce que** le dispositif d'interprétation (6) est conçu pour dériver de l'au moins un signal reçu au moins une valeur caractéristique qui caractérise la qualité du lait en référence à au moins une composante qui varie de manière évidente, **caractérisé en ce qu'**il est prévu au moins deux chambres de mesure (4) qui sont configurées de telle sorte que la mesure est réalisée à deux températures différentes.

22. Dispositif selon au moins l'une des revendications 19 à 21, **caractérisé en ce qu'**il est prévu au moins un dispositif de mesure de température (13) avec lequel peut être enregistrée une température de mesure.

23. Dispositif selon au moins l'une des revendications 19 à 22, **caractérisé en ce qu'**il est prévu sur ce dispositif de mesure au moins un dispositif de chauffage (12) et/ou un dispositif de refroidissement.

24. Dispositif selon au moins l'une des revendications 19 à 23, **caractérisé en ce que** la fréquence du signal émis est comprise dans la plage entre 500 kHz et 200 MHz.

25. Dispositif selon au moins l'une des revendications 19 à 24, **caractérisé en ce qu'**au moins deux chambres de mesure (4) sont prévues.

26. Dispositif selon au moins l'une des revendications 20 à 25, **caractérisé en ce qu'**une valeur caractéristique pour un nombre de particules dans la plage de tailles de 0,1 mm à 4 mm peut être dérivée.

27. Dispositif selon au moins l'une des revendications 20 à 26, **caractérisé en ce qu'**il est prévu un dispositif de commande au moins pour commander le dispositif de mesure.
